# EUROPEAN PATENT SPECIFICATION

(11) **EP 2 447 405 B1**
(45) Date of publication and mention of the grant of the patent: **19.07.2017**
(21) Application number: 10425343.0
(22) Date of filing: 28.10.2010
(51) Int. Cl.: D06F 35/00, D06F 39/00, A47L 15/42

(54) **METHOD AND DEVICE FOR WASHING LAUNDRY**
VERFAHREN UND VORRICHTUNG ZUM WASCHEN VON WÄSCHE
PROCÉDÉ ET DISPOSITIF DE LAVAGE DU LINGE

(43) Date of publication of application: 02.05.2012
(73) Proprietor: Candy S.p.A., 20900 Monza, Monza e Brianza (IT)
(72) Inventor: Fumagalli, Aldo, 20900 Monza, Monza e Brianza (IT)
(74) Representative: Leihkauf, Steffen Falk

(56) References cited:
- EP-A1- 0 607 628
- EP-A2- 0 771 898
- DE-A1- 4 104 450

## Description

The present invention refers to a method for washing laundry, in particular by means of a washing machine or household washer-drier.

Washing machines and household washer-driers comprise a support and housing structure, inside which a wash tank is housed equipped with a front opening that can be closed by means of a door with a window that is hinged at the front to the housing. Inside the wash tank, a basket for receiving the laundry that is to be washed and (in the case of a washer-drier machine) that is to be dried, is housed in a rotatable manner around a horizontal or inclined axis. Also the basket defines a front opening arranged at the opening of the wash tank, so as to be able to carry out the loading and unloading of the laundry.

The wash tank is suitable for containing the washing liquid during the steps of washing the laundry and for forming (in washer-drier machines) a portion of the drying circuit during the drying step of the laundry.

In order to allow the tank to be loaded with mains water and detergent substances and additives, a washing water loading system is foreseen that can be connected to the water mains. At the bottom of the wash tank, a discharge duct is foreseen with associated discharge pump that provides for removing the washing liquid from the tank and that, together with the loading system, controls the level of liquid inside the tank. In order to heat the washing liquid contained in the tank it is foreseen for there to be an electric resistance arranged inside the tank in the gap between the wall of the tank and the laundry-holder basket.

The drying circuit of washer-drier machines of the prior art typically comprises an suction unit, a heat exchanger and a heating unit with electrical resistances communicating with one another by means of a drying duct.

In such a closed circuit, the air flow caused by the suction unit is heated by the electrical resistances and is conveyed into the basket, in which, passing through the wet laundry, causes the water contained in the fabrics to evaporate. In the heat exchanger, generally a container separate from the wash tank and equipped with a spraying nozzle, the moist air is cooled down by a spray of cold water. Due to the cooling, the vapour condenses and is collected and discharged together with the cooling water. The dehumidified air is then sucked up again by the suction unit and is made to recirculate.

Supplying the heat exchanger with cooling water usually occurs through a cooling duct with a dedicated solenoid valve that adjusts the loading of mains water into the heat exchanger (condenser).

Washing machines and washer-driers of the prior art and the washing and drying methods they implement, although satisfactory from many aspects, have high water, electric energy and detergent consumption, both in the washing step and in the drying step. DE4104450A1 and EP0607628A1 disclose laundry washing machines and laundering methods in accordance with the preambles of claims 1 and 16.

The purpose of the present invention is therefore that of providing a method of washing by means of a washing machine or washer-drier having characteristics such as to reduce the consumption of water, detergent, additives and electric energy, for the same amount of washing and (in the case of a washer-drier machine) drying.

These and other purposes are achieved through a washing method according to claim 16, implemented by means of a washing machine comprising:
- a laundry basket supported inside a wash tank suitable for containing the washing liquid,
- heating means arranged inside the wash tank,
- a loading system suitable for supplying mains water to the wash tank,
- a discharge system suitable for discharging the liquid contained in the wash tank,
- a recovery tank suitable for containing a volume of washing liquid, said tank being separate from the wash tank,
in which such a method comprises the steps of:
B) loading mains water into the wash tank and carrying out a first wash cycle of a first load of laundry, in which said first wash cycle comprises:
B1) a washing step of the first load of laundry using the water contained in the wash tank and activating the heating means to heat the water in the wash tank;
B2) a rinsing step of the first load of laundry with heating means deactivated and using the water contained in the wash tank;
C) subsequently to the end of the first wash cycle, loading mains water into the wash tank and carrying out a second wash cycle of a second load of laundry, in which said second wash cycle comprises:
   C1) a washing step of the second load of laundry using the water contained in the wash tank and activating the heating means to heat the water in the wash tank;
   C2) a rinsing step of the second load of laundry with heating means deactivated and using the water contained in the wash tank;
in which the method also comprises the steps of:
D1) conveying a portion of water used during at least one step of the first wash cycle from the wash tank to the recovery tank; and
D2) during the second wash cycle, introducing the portion of recovered water from the recovery tank into the wash tank.

The purpose of the invention is also achieved by means of a washing machine according to claim 1, comprising:
- a laundry basket supported inside a wash tank suitable for containing the washing liquid,
- heating means arranged inside the wash tank,
- a loading system suitable for supplying mains water into the wash tank,
- a discharge system suitable for discharging the liquid contained in the wash tank,
- means for automatically carrying out a washing program that comprises the steps of:
   B) loading mains water into the wash tank and carrying out a first wash cycle, in which said first wash cycle comprises:
      B1) a washing step that uses the water contained in the wash tank and that activates the heating means to heat the water in the wash tank;
      B2) a rinsing step that uses the water contained in the wash tank with the heating means deactivated,
in which the washing machine also comprises:
- a recovery tank separate from the wash tank and that is suitable for containing a portion of recovered liquid,
- recycling means configured so as to introduce, during one of the wash cycle steps, the portion of recovered liquid from the recovery tank into the wash tank, and
- recovering means configured so as to convey, after at least one wash cycle step, a portion of liquid used during the wash cycle from the wash tank to the recovery tank.

Thanks to the recovery and reuse of a portion of the water already used in the previous wash cycle, there is a saving both in terms of water and electric energy, due to the fact that it is possible to have a volume of recovered water at room temperature or at a temperature that is further increased due to the operation temperature of the washing machine.

Further advantageous aspects of the invention shall emerge from the following description of some embodiments thereof given as an example and not for limiting purposes, with reference to the attached figures, in which:
- figure 1 is a schematic representation of a washing method according to a first embodiment of the invention;
- figure 2 is a schematic representation of a washing method according to a second embodiment of the invention;

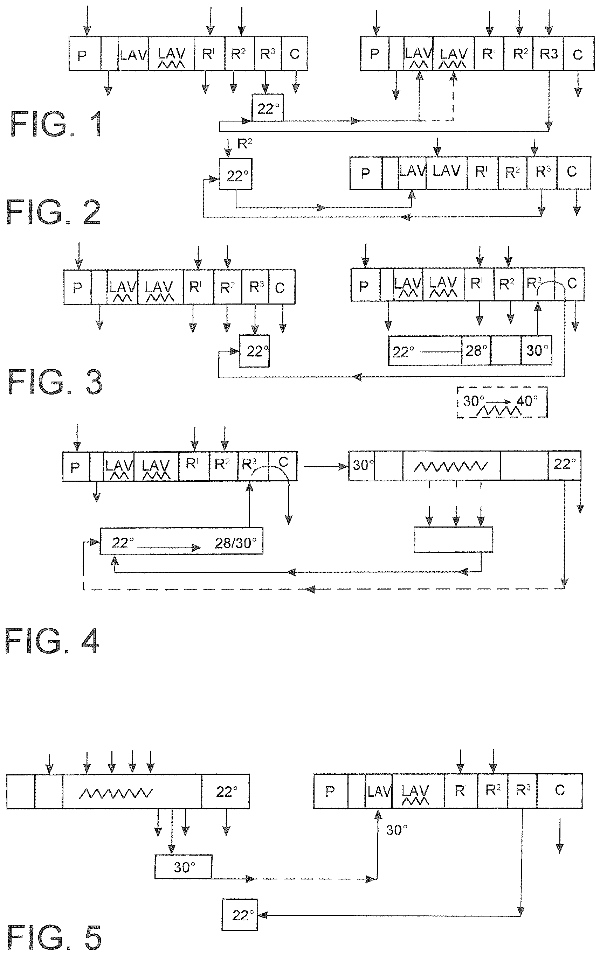

- figure 2 is a schematic representation of a washing method according to a second embodiment of the invention;
- figure 3 is a schematic representation of a washing method according to a third embodiment of the invention;
- figure 4 is a schematic representation of a washing method according to a fourth embodiment of the invention;
- figure 5 is a schematic representation of a washing method according to a fifth embodiment of the invention;

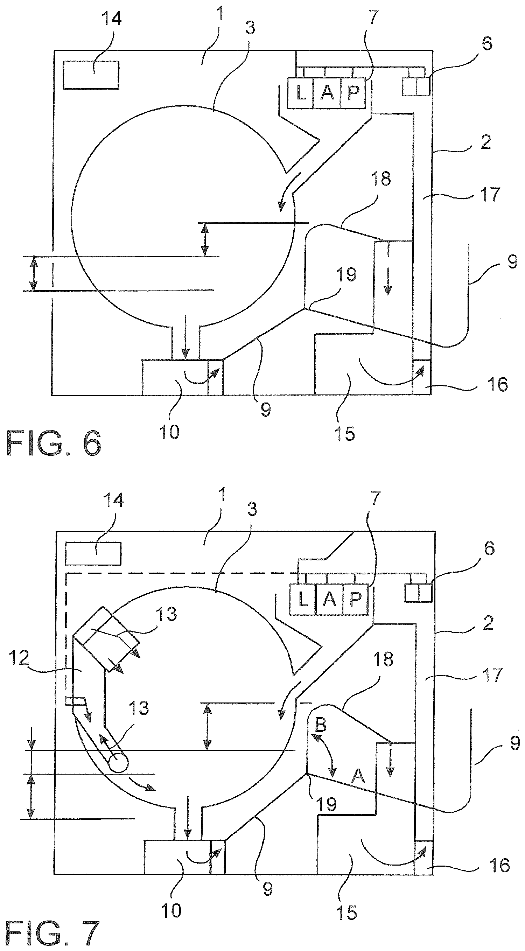

- figure 6 is a schematic view of a washing machine according to an embodiment of the invention;
- figure 7 is a schematic view of a washer-drier machine according to an embodiment;

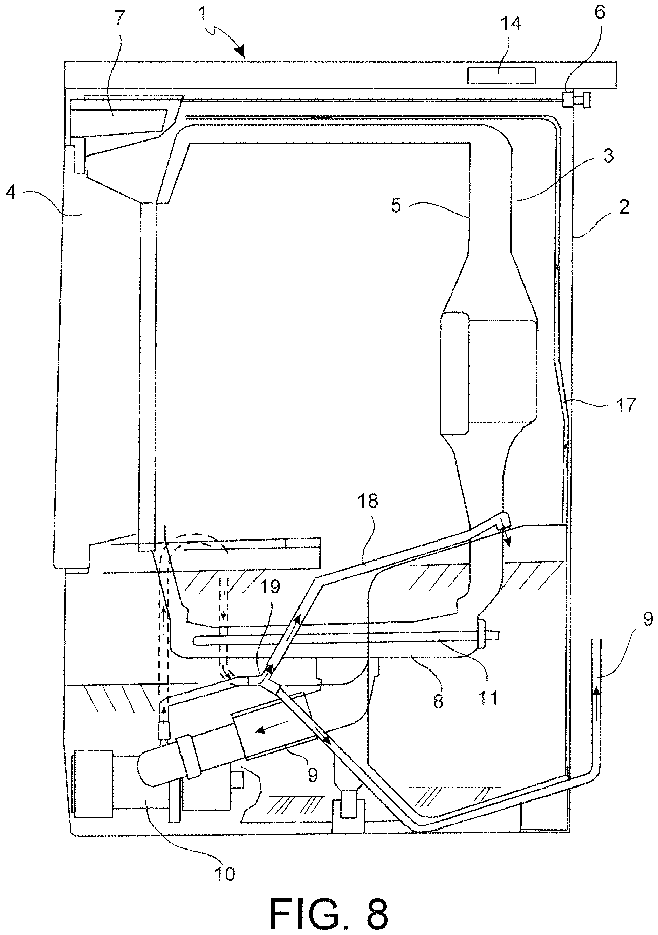

- figure 8 is a transparent side view of a washing machine according to an embodiment;

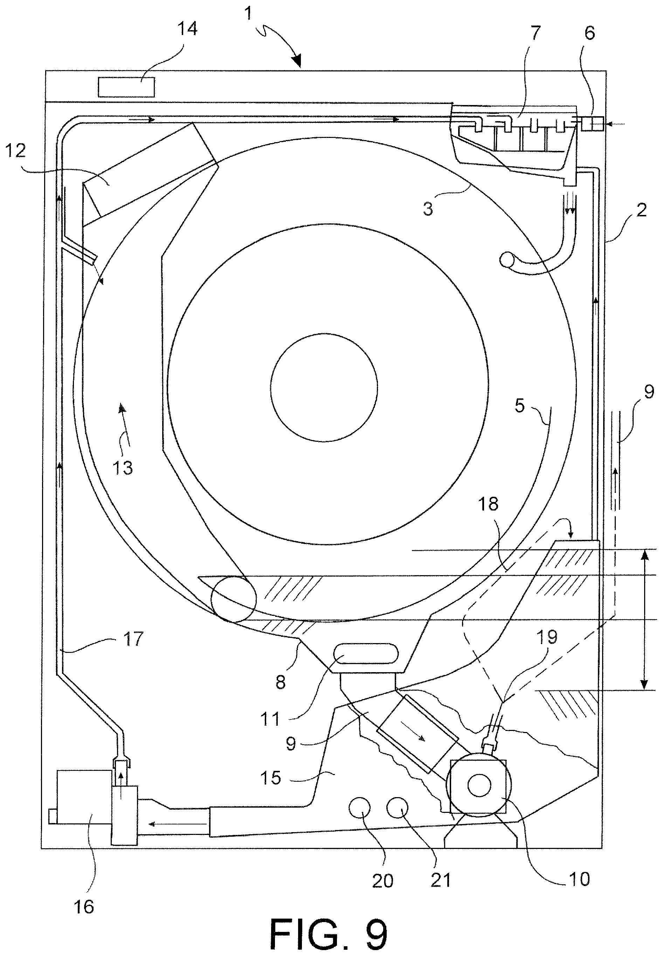

- figure 9 is a transparent front view of a washer-drier machine according to an embodiment;

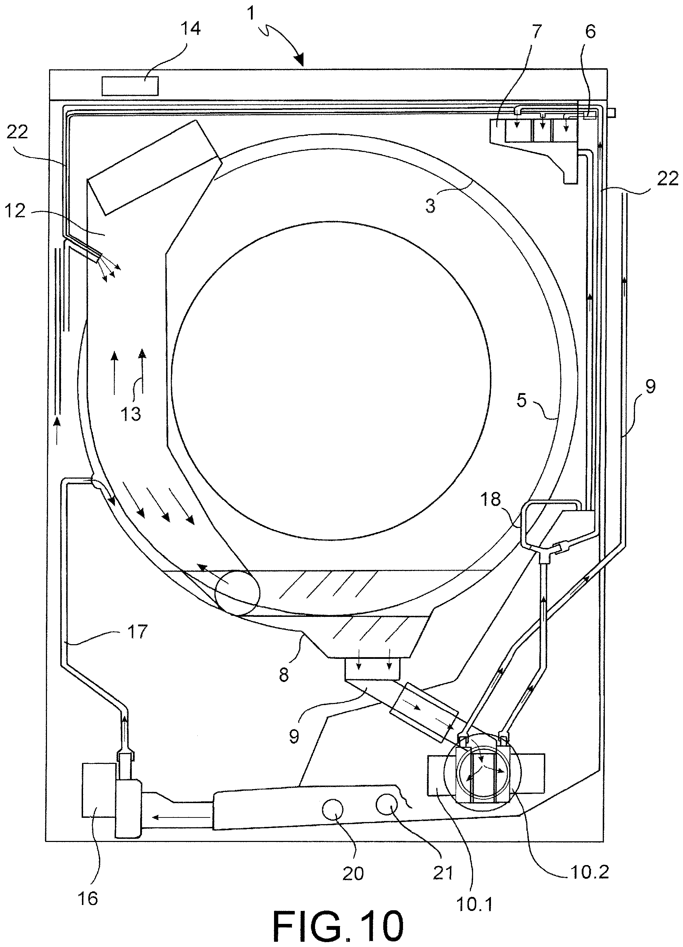

- figure 10 is a transparent front view of a washer-drier machine according to a further embodiment;

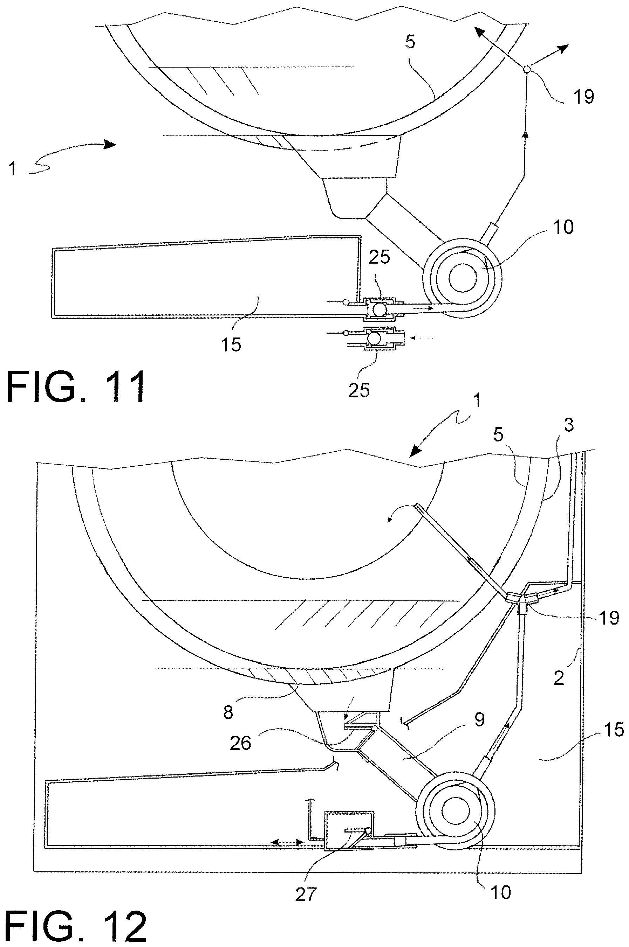

- figures 11 and 12 are partial views of a washing machine according to further embodiments;

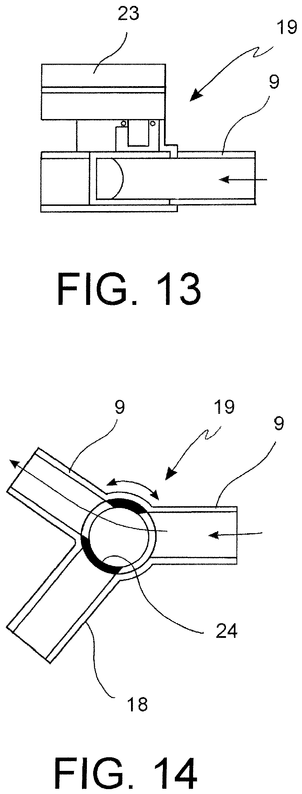

- figure 13 is a side view of a selector valve in accordance with one embodiment;
- figure 14 is a longitudinal section view of one selector valve of figure 13;

With reference to the figures, a washing machine 1 or washer-drier intended as a particular embodiment of the washing machine comprises a support structure and housing 2, inside which a wash tank 3 is housed, equipped with a front opening that can be closed by means of a door with a window 4 that is hinged at the front to the housing 2. Inside the wash tank 3, a basket 5 for receiving the laundry to be washed and/or dried is housed in a rotatable manner around a horizontal or inclined axis. Also the basket 5 defines a front opening arranged at the opening of the wash tank 3, so as to be able to carry out the loading and unloading of the laundry.

The wash tank 3 is suitable for containing the washing liquid during the steps of washing the laundry and (in the embodiment of the washer-drier machine) to form a portion of the drying circuit during the drying step of the laundry.

In order to make it possible to load the tank with mains water and detergent substances and additives, a loading system of the washing water is foreseen that can be connected to the water mains. Such a loading system of the washing water comprises a plurality of wash flow paths that extend, for example, from two supply solenoid valves 6 through corresponding compartments of a detergent holder tray 7, to inside the wash tank 3.

At the bottom 8 of the wash tank 3 a discharge duct 9 is connected with an associated discharge pump 10 that provides for removing the washing liquid from the tank 3 and that controls, together with the supply solenoid valves 6, the level of liquid inside the tank 3.

In order to heat the washing liquid contained in the tank 3, a coiled electrical resistance 11 is foreseen, arranged inside the tank 3, in particular at the bottom 8 of the latter, in the gap between the wall of the tank 3 and the laundry-holder basket 5.

The washer-drier machine 1 can also comprise a closed drying circuit 12 with an suction unit, for example a fan rotor actuated by an electric motor, a heat exchanger, as well as a heating unit with electrical resistances communicating with one another by means of a drying duct.

In such a closed circuit, the air flow 13 caused by the suction unit is heated by the electrical resistance and is conveyed into the basket 5, in which, passing through the wet laundry, causes the water contained in the fabrics to evaporate. The heat exchanger is arranged downstream of the laundry-holder basket 5 (with reference to the direction of the drying air flow 13) and cools down the moist air coming from the basket 5.

Due to the cooling, the vapour condenses and is collected and can be discharged, for example, together with a volume of cooling water. The dehumidified air is then sucked up again by the suction unit and is made to recirculate.

The washing machine 1 also comprises a control unit 14 with a program selector that makes it possible to automatically select and carry out a washing program that comprises the steps of loading the mains water into the wash tank and carrying out a wash cycle that comprises:
- one or more washing steps that use the water contained in the wash tank 3 and in which the control unit activates the electrical resistance 11 to heat the water in the wash tank 3;
- one or more rinsing steps that use the water contained in the wash tank 3 with electrical resistance 3 deactivated,
- possibly but not necessarily a step of centrifuging the laundry by means of rotation of the laundry basket 5.

According to one aspect of the invention, the washing machine 1 also comprises a recovery tank 15 that is separate from the wash tank 3 and is suitable for containing a portion of recovered liquid, as well as recycling means, in particular a recirculation pump 16 arranged in a recirculation duct 17 that connects the recovery tank 15 to the wash tank 3. The recirculation means, in particular the recirculation pump 16, are driven by the control unit 14 so as to introduce, during one of the wash cycle steps, the portion of recovered liquid from the recovery tank 15 into the wash tank 3.

The washing machine 1 also comprises recovering means, in particular a recovering duct 18 having an outlet opening that is connected to the recovery tank 15 and an inlet opening that is connected, for example, by means of a selector valve 19 to the discharge duct 9 downstream of the discharge pump 10 (Figures 6, 7, 8, 9).

In accordance with an alternative embodiment, the washing machine 1 configured as a washer-drier, comprises a double discharge pump having:
- a first pump 10.1 connected between the tank bottom and a duct 22 for supplying the heat exchanger and that is controlled to draw liquid from the tank bottom and to convey it into the supply duct 22 and,
- a second pump 10.2 that is connected between the tank bottom and the discharge duct 9 and is configured and controlled by the control unit 14 to discharge the liquid from the tank bottom and to convey it into the discharge duct 9.

In this embodiment, the inlet opening of the recovery duct 18 could be connected by means of the selector valve 19 to the supply duct 22 of the heat exchanger (Figure 10) or to the discharge duct 9 (not illustrated).

Moreover, both the pumps 10.1 and 10.2 can advantageously be integrated in the same pump housing.

The recovering means, in particular, the selector valve 19 and the discharge pump 10, are configured and controlled by the control unit 14 so as to convey, after at least one wash cycle step, a portion of liquid used during the wash cycle from the wash tank 3 into the recovery tank 15.

Advantageously, the selector valve 19 comprises a selective shutter 24 that is connected with an electric control motor 23 driven by the control unit 14 in dependency of the selected washing program. Thanks to the use of a selector valve with an electric control motor (contrarily to electromagnetic or thermal-expansion actuators), the valve itself responds rapidly to electrical control signals generated by the control unit, thus making it possible to capture the portion of liquid to be recovered exactly for the time and in the volume foreseen by the washing program.

In accordance with an embodiment (figure 11), the discharge pump 10 comprises a first delivery opening connected to the discharge duct and a second delivery opening connected to the recovery tank 15 through the interposition of a unidirectional valve 25 and a shut-off valve controlled by the control unit 14, so that the discharge pump 10 can directly supply (but not draw) liquid to the recovery tank 15.

In accordance with a further embodiment (figure 12), the discharge pump 10 comprises a first suction opening connected to the tank bottom and a second suction opening connected to the recovery tank 15, in which, to each suction opening there is an associated opening and shut-off valve 26, 27 controlled by the control unit 14 so that the single discharge pump 10 can selectively supply and draw liquid into and from the recovery tank 15.

This advantageously makes it possible to avoid having a dedicated pump for the sole recirculation of the liquid previously recovered.

By means of the washing machine 1 described so far it is possible to carry out a washing method that comprises the steps of:
- loading mains water into the wash tank 3 and carrying out a first wash cycle of a first load of laundry, in which the first wash cycle comprises:
- a washing step of the first load of laundry using the water contained in the wash tank 3 and activating the heating means 11 to heat the water in the wash tank 3;
- a rinsing step of the first load of laundry with heating means 11 deactivated and using the water contained in the wash tank 3;
- subsequently to the end of the first wash cycle, loading mains water into the wash tank 3 and carrying out a subsequent second wash cycle of a second load of laundry, in which also the second wash cycle comprises:
- a washing step of the second load of laundry using the water contained in the wash tank 3 and activating the heating means 11 to heat the water in the wash tank 3;
- a rinsing step of the second load of laundry with heating means 11 deactivated and using the water contained in the wash tank 3,
and in which
- a portion of water used during at least one step of the first wash cycle is conveyed from the wash tank 3 into the recovery tank 15; and
- during the second wash cycle, the portion of water recovered is introduced by the recovery tank 15 into the wash tank 3.

Thanks to the recovery and reuse of a portion of the water already used in the previous wash cycle, there is both a saving in terms of water and electric energy, since it is possible to have a volume of recovered water at room temperature or at a temperature that is further increased thanks to the operation temperature of the washing machine.

In accordance with an embodiment, the recovering means are configured and controlled by the control unit 14 so as to draw a portion of liquid used during the rinsing step and to convey it from the wash tank 3 into the recovery tank 15.

In accordance with an alternative embodiment, the wash cycle comprises a plurality of rinsing steps broken up by steps of discharging the liquid from the wash tank 3 and loading mains water into the wash tank 3 and the recovering means are configured and controlled by the control unit 14 so as to draw a portion of liquid used during a last rinsing step of the plurality of rinsing steps, and convey it from the wash tank 3 to the recovery tank 15. In this way, the recovered liquid is substantially clean water having a very low residual detergent content.

Alternatively, the recovering means are configured and controlled by the control unit 14 so as to draw a portion of liquid used during a rinsing step prior to the last rinsing step, and convey it from the wash tank 3 to the recovery tank 15. In such a way, the recovered liquid has a detergent or additive content that can be reused together with the liquid itself in the subsequent wash cycle.

In accordance with an embodiment, the wash cycle comprises a step of centrifuging the laundry after a last rinsing step and the recovering means are configured and controlled by the control unit 14 so as to draw a portion of liquid used during the last rinsing step and convey it from the wash tank 3 to the recovery tank 15.

In accordance with a further embodiment, the wash cycle comprises a step of drying the laundry after a last rinsing step and the recovering means are configured and controlled by the control unit 14 so as to draw a portion of liquid used during the last rinsing step and condensed during the drying step and to convey it from the wash tank 3 (in the case in which the heat exchanger discharges the condensation into the tank 3) or from the heat exchanger into the recovery tank 15. In this case, the recovered liquid is at least partially decalcified and, in the subsequent wash cycle, requires less detergent or additives to reduce the hardness of the water.

The washing machine 1 can also be configured to recover, in the drying step, in addition to the condensation, also a part of cooling water used in the heat exchanger, in particular in the case in which the cooling water is discharged from the heat exchanger into the wash tank 3.

In accordance with an embodiment, the recycling means, in particular the recirculation pump 16, are driven by the control unit 14 so as to introduce the portion of liquid recovered from the recovery tank 15 into the wash tank 3 during the rinsing step.

In such a way, the recovered and reused liquid is preheated due to the heat of the previous washing steps and due to the motor that moves the laundry basket 5.

Alternatively (and in dependency of a selected washing program by means of the program selector), the recycling means, in particular the recirculation pump 16, are driven by the control unit 14 so as to introduce the portion of liquid recovered from the recovery tank 15 into the wash tank 3 during the washing step.

In accordance with a further embodiment, the control unit 14 with the program selector make it possible to select a washing program that comprises a plurality of washing steps broken up by steps of discharging the liquid from the tank 3 and loading liquid into the tank 3, in which the recycling means, configured and controlled by the control unit 14 so as to introduce the portion of recovered liquid from the recovery tank 15 into the wash tank 3 during a washing step after a first washing step, for example during al last washing step, of the plurality of washing steps.

Even in this case, the recovered and reused liquid is preheated due to the heat of the previous washing steps and to the motor that moves the laundry basket 5.

According to the invention, the recovery tank 15 is equipped with second heating means 20, for example an electrical resistance controlled by the control unit 14 so as to heat the recovered liquid before it is inserted into the wash tank 3, for example for a warm rinsing step with a subsequent step of thermal centrifugation with simultaneous activation of a centrifugation and drying step.

In general, it is important to note that the washing machine 1 is configured so that the portion of liquid recovered in the recovery tank 15 can be isolated from the volume of liquid in the wash tank 3 and from its movements that can be activated independently from the recovered liquid.

In accordance with an embodiment, the recirculation duct 17 can be in fluid communication with a detergent compartment of the detergent holder tray 7, so that, during the introduction of the portion of recovered liquid into the wash tank 3, such recovered liquid can mix with a washing detergent or additive contained in the detergent compartment when the recovered liquid passes through it.

As can be seen in the attached figures, the recovery tank 15 and the relative recovering and recirculation means can be added to the washing machines and washer-driers currently known without requiring any redesigning of their base structure and partially keeping the current industrial manufacture.

In accordance with a further embodiment, the recovering means are configured and controlled by the control unit 14 so as to draw from the wash tank 3 a portion of liquid that is enriched with detergent or sanitising substances in general (for example during or after a washing step with detergent) and convey it to the recovery tank 15, avoiding the proliferation of micro-organisms during the wait for the subsequent wash cycle and the reuse of the recovered liquid.

In accordance with a further embodiment, the recovery tank 15 is in communication with the surrounding environment and thus operates at atmospheric pressure in a simple and safe manner without requiring hydraulic circuits with a pressure seal.

As a non limiting example, the recovery tank 15 can have a volumetric capacity of around 10 litres. In order to be able to adapt in the best way possible to the amount of laundry to be washed, the method foresees and the machine 1 can be configured to add the portion of recovered liquid to a portion of mains water already present in the wash tank 3 and/or to add a portion of mains water to the portion of water recovered and previously reintroduced into the wash tank 3, so as to have the volume of liquid foreseen by the washing program.

In accordance with a further embodiment, the washing machine 1 can comprise a sensor 21 to detect the presence of detergent substances in the portion of recovered liquid in the recovery tank 15, for example a turbidity sensor, and the control unit is configured so as to control the loading into the tank 3:
- of the recovered liquid from the recovering tank 15,
- of mains water through the detergent holder tray 7,
- of mains water, bypassing the detergent holder tray 7,
in dependency of a value detected by the turbidity sensor 21 so as to obtain in the wash tank 3 a mixture of water and detergent substances foreseen by the washing program.

This makes it possible to achieve considerable savings in terms of detergent for washing loads of laundry that are not very dirty.

The steps of the procedure described with reference to the operation of specific components of the washing machine/washer-drier 1 should also be taken as embodiments of the washing method that can be carried out through means and components that are different from the embodiments of the washing machine 1 described.

The washing method and the machine for treating the laundry according to the invention, in particular in the embodiment of the washer-drier machine has numerous advantages.

It makes it possible to save water, electric energy and detergent substances that are necessary for treating the laundry.

Of course, the machine for treating the laundry, in particular a washer-drier, according to the present invention, can be further modified and varied by a man skilled in the art, with the purpose of satisfying contingent and specific requirements, all moreover covered by the scope of protection of the invention, as defined by the following claims.

## Claims

1. Washing machine (1) comprising:
- a laundry basket (5) supported inside a wash tank (3) suitable for containing a washing liquid,
- heating means (11) arranged inside the wash tank (3),
- a loading system (6, 7) suitable for supplying mains water to the wash tank (3),
- a discharge system (9, 10) suitable for discharging the liquid contained in the wash tank (3),
- a control unit (14) with a program selector configured so as to automatically carry out a washing program comprising:
B) loading mains water into the wash tank (3) and carrying out a first wash cycle, wherein said first wash cycle comprises:
B1) a washing step that uses the water contained in the wash tank (3) and activates the heating means (11) to heat the water in the wash tank (3);
B2) a rinsing step that uses the water contained in the wash tank (3) when the heating means (11) are deactivated,
the washing machine (1) further comprising:
- a recovery tank (15) separate from the wash tank (3) and suitable for containing a portion of recovered liquid,
- recycling means (16, 17) configured so as to introduce, during one of the wash cycle steps, the portion of recovered liquid from the recovery tank (15) into the wash tank (3), and
- recovering means (18, 19) configured so as to convey, after at least one wash cycle step, a portion of liquid used during the wash cycle from the wash tank (3) into the recovery tank (15), **characterized in that** the recovery tank (15) comprises second heating means (20) controlled by the control unit (14) for heating the recovered liquid before introducing it into the wash tank (3).

2. Washing machine (1) according to claim 1, wherein:
- said recycling means (16, 17) comprise a recirculation pump (16) driven by the control unit (14) and arranged in a recirculation duct (17) that connects the recovery tank (15) to the wash tank (3) and
- said recovering means (18, 19) comprise a recovering duct (18) having an outlet opening connected to the recovery tank (15) and an inlet opening connected by means of a selector valve (19) to a discharge duct (9) of the wash tank (3) downstream of a discharge pump (10), wherein the selector valve (19) and the discharge pump (10) are controlled by the control unit (14).

3. Washing machine (1) according to claims 1 or 2, wherein the control unit (14) is configured so as to carry out a washing program comprising the steps of:
- loading mains water into the wash tank (3) and carrying out a first wash cycle of a first load of laundry, wherein the first wash cycle comprises:
- a washing step of the first load of laundry using the water contained in the wash tank (3) and activating the heating means (11) to heat the water in the wash tank (3);
- a rinsing step of the first load of laundry with heating means (11) deactivated and using the water contained in the wash tank (3);
- subsequently to the end of the first wash cycle, loading mains water into the wash tank (3) and carrying out a subsequent second wash cycle of a second load of laundry, wherein the second wash cycle comprises:
- a washing step of the second load of laundry by using the water contained in the wash tank (3) and activating the heating means (11) to heat the water in the wash tank (3);
- a rinsing step of the second load of laundry with heating means (11) deactivated and using the water contained in the wash tank (3),
and wherein
- a portion of water used during at least one step of the first wash cycle is conveyed from the wash tank (3) into the recovery tank (15); and
- during the second wash cycle, the portion of water recovered is introduced from the recovery tank (15) into the wash tank (3).

4. Washing machine (1) according to any one of the previous claims, wherein the recovering means are configured and controlled by the control unit (14), in dependency of the selected washing program, so as to draw a portion of liquid used during the rinsing step and convey it from the wash tank (3) into the recovery tank (15).

5. Washing machine (1) according to one of the previous claims, wherein the wash cycle controlled by the control unit (14) comprises a plurality of rinsing steps broken up by steps of discharging the liquid from the wash tank (3) and loading mains water into the wash tank (3) and the recovering means (18, 19) are configured and controlled by the control unit (14), in dependency of the selected washing program, so as to draw a portion of liquid used during a last rinsing step of the plurality of rinsing steps, and convey it from the wash tank (3) into the recovery tank (15).

6. Washing machine (1) according to one of the previous claims, wherein the wash cycle controlled by the control unit (14) comprises a plurality of rinsing steps broken up by steps of discharging the liquid from the wash tank (3) and loading mains water into the wash tank (3) and the recovering means (18, 19) are configured and controlled by the control unit (14), in dependency of the selected washing program, so as to draw a portion of liquid used during a previous rinsing step to a last rinsing step of the plurality of rinsing steps, and convey it from the wash tank (3) into the recovery tank (15).

7. Washing machine (1) according to one of the previous claims, wherein the wash cycle controlled by the control unit (14) comprises a step of centrifuging the laundry, that is after a last rinsing step and the recovering means (18, 19) are configured and controlled by the control unit (14), in dependency of the selected washing program, so as to draw, during said centrifuging step, a portion of liquid used during the last rinsing step and convey it from the wash tank (3) into the recovery tank (15).

8. Washing machine (1) according to one of the previous claims, comprising a drying circuit (12) with a suction unit, a heat exchanger and a heating element communicating with one another through a drying duct,
wherein the wash cycle controlled by the control unit (14) comprises a step of drying the laundry after a last rinsing step and the recovering means (18, 19) are configured and controlled by the control unit (14), in dependency of the selected washing program, so as to draw a portion of liquid used during the rinsing step and condensed during the drying step and to convey said portion of condensed liquid into the recovery tank (15).

9. Washing machine (1) according to claim 8, wherein the recovering means (18, 19) are configured and controlled by the control unit (14) so as to recover, in the drying step, in addition to the condensation also a portion of water for cooling the heat exchanger.

10. Washing machine (1) according to any one of the previous claims, wherein the recycling means (16, 17) are driven by the control unit (14), in dependency of the selected washing program, so as to introduce the portion of recovered liquid from the recovery tank (15) into the wash tank (3) during the rinsing step.

11. Washing machine (1) according to any one of the previous claims, wherein the recycling means (16, 17) are driven by the control unit (14), in dependency of the selected washing program, so as to introduce the portion of recovered liquid from the recovery tank (15) into the wash tank (3) during the washing step.

12. Washing machine (1) according to any one of the previous claims, wherein the control unit (14) with the program selector make it possible to select a washing program that comprises a plurality of washing steps broken up by steps of discharging liquid from the tank (3) and loading liquid into the tank (3), wherein the recycling means (16, 17) are driven by the control unit (14), in dependency of the selected washing program, so as to introduce the portion of recovered liquid from the recovery tank (15) into the wash tank (3) during a washing step after a first washing step of the plurality of washing steps.

13. Washing machine (1) according to any one of the previous claims, wherein the recycling means (16, 17) are in fluid communication with a detergent holder tray (7), so that, during the introduction of the portion of recovered liquid into the wash tank (3), such recovered liquid can mix with a washing detergent or additive contained in the detergent holder tray (7) when the recovered liquid passes through it.

14. Washing machine (1) according to any one of the previous claims, comprising a sensor (21) for detecting the presence of detergent substances in the portion of recovered liquid in the recovery tank (15), wherein the control unit (14) is configured to control the loading into the tank (3):
- of the recovered liquid from the recovering tank (15),
- of mains water through a detergent holder tray (7),
- of mains water, bypassing the detergent holder tray (7),
in dependency of a value detected by the detergent sensor (21) in the recovery tank (15).

15. Washing machine (1) according to claim 14, in which said sensor (21) for detecting the presence of detergent substances is a turbidity sensor.

16. Washing method by means of a washing machine (1) comprising:
- a laundry basket (5) supported inside a wash tank (3) suitable for containing the washing liquid,
- heating means (11) arranged inside the wash tank (3),
- a loading system (6, 7) suitable for supplying mains water into the wash tank (3),
- a discharge system (9, 10) suitable for discharging the liquid contained in the wash tank (3),
- a recovery tank (15) suitable for containing a volume of washing liquid, said recovery tank (15) being separate from the wash tank (3) and comprising second heating means (20).
wherein the method comprises the steps of:
B) loading mains water into the wash tank (3) and carrying out a first wash cycle of a first load of laundry, wherein said first wash cycle comprises:
B1) a washing step of the first load of laundry by using the water contained in the wash tank (3) and activating the heating means (11) to heat the water in the wash tank (3);
B2) a rinsing step of the first load of laundry with heating means (11) deactivated and using the water contained in the wash tank (3);
C) subsequently to the end of the first wash cycle, loading mains water into the wash tank (3) and carrying out a second wash cycle of a second load of laundry, wherein said second wash cycle comprise:
C1) a washing step of the second load of laundry using the water contained in the wash tank (3) and activating the heating means (11) to heat the water in the wash tank (3);
C2) a rinsing step of the second load of laundry with heating means (11) deactivated and using the water contained in the wash tank (3); wherein:
D1) a portion of water used during at least one step of the first wash cycle is conveyed from the wash tank (3) into the recovery tank (15); and
D2) during the second wash cycle, the portion of water recovered from the recovery tank (15) is introduced into the wash tank (3); wherein the recovered liquid is heated by means of said second heating means (20) before introducing it into the wash tank (3).

## Patentansprüche

1. Waschmaschine (1), umfassend:
- einen innerhalb eines Waschbehälters (3) gehalterten Wäschekorb (5), welcher dafür geeignet ist, eine Waschflüssigkeit zu enthalten,
- Heizmittel (11), welche innerhalb des Waschbehälters (3) angeordnet sind,
- ein Einfüllsystem (6, 7), welches dafür geeignet ist, dem Waschbehälter (3) Leitungswasser zuzuführen,
- ein Ablasssystem (9, 10), welches dafür geeignet ist, die in dem Waschbehälter (3) enthaltene Flüssigkeit abzulassen,
- eine Steuer-/Regeleinheit (14) mit einer Programmauswahl, welche dafür eingerichtet ist, automatisch ein Waschprogramm auszuführen, welches umfasst:
B) Einfüllen von Leitungswasser in den Waschbehälter (3) und Ausführen eines ersten Waschzyklus, wobei der erste Waschzyklus umfasst:
B1) einen Waschschritt, welcher das in dem Waschbehälter (3) enthaltene Wasser verwendet und die Heizmittel (11) aktiviert, um das Wasser in dem Waschbehälter (3) zu erwärmen;
B2) einen Spülschritt, welcher das in dem Waschbehälter (3) enthaltene Wasser verwendet, wenn die Heizmittel (11) deaktiviert sind,
wobei die Waschmaschine (1) ferner umfasst:
- einen Rückgewinnungsbehälter (15), welcher von dem Waschbehälter (3) getrennt ist und dafür geeignet ist, einen Anteil rückgewonnener Flüssigkeit zu enthalten,
- Rückführmittel (16, 17), welche dafür eingerichtet sind, während eines der Waschzyklusschritte den Anteil rückgewonnener Flüssigkeit aus dem Rückgewinnungsbehälter (15) in den Waschbehälter (3) einzuführen, und
- Rückgewinnungsmittel (18, 19), welche dafür eingerichtet sind, nach wenigstens einem Waschzyklusschritt einen Anteil von während des Waschzyklus verwendeter Flüssigkeit aus dem Waschbehälter (3) in den Rückgewinnungsbehälter (15) zu befördern,
**dadurch gekennzeichnet, dass** der Rückgewinnungsbehälter (15) von der Steuer-/Regeleinheit (14) gesteuerte/geregelte zweite Heizmittel (20) umfasst, um die rückgewonnene Flüssigkeit zu erwärmen, bevor sie in den Waschbehälter (3) eingeführt wird.

2. Waschmaschine (1) nach Anspruch 1, wobei:
- die Rückführmittel (16, 17) eine Rezirkulationspumpe (16) umfassen, welche von der Steuer-/Regeleinheit (14) angetrieben ist und in einem Rezirkulationskanal (17) angeordnet ist, welcher den Rückgewinnungsbehälter (15) mit dem Waschbehälter (3) verbindet, und
- die Rückgewinnungsmittel (18, 19) einen Rückgewinnungskanal (18) umfassen, welcher eine mit dem Rückgewinnungsbehälter (15) verbundene Auslassöffnung und eine Einlassöffnung aufweist, welche stromabwärts einer Ablasspumpe (10) mittels eines Auswahlventils (19) mit einem Auslasskanal (9) des Waschbehälters (3) verbunden ist, wobei das Auswahlventil (19) und die Ablasspumpe (10) von der Steuer-/Regeleinheit (14) gesteuert/geregelt sind.

3. Waschmaschine (1) nach Anspruch 1 oder 2, wobei die Steuer-/Regeleinheit (14) dafür eingerichtet ist, ein Waschprogramm auszuführen, welches die folgenden Schritte umfasst:
- Einfüllen von Leitungswasser in den Waschbehälter (3) und Ausführen eines ersten Waschzyklus einer ersten Wäscheladung, wobei der erste Waschzyklus umfasst:
- einen Waschschritt der ersten Wäscheladung, welcher das in dem Waschbehälter (3) enthaltene Wasser verwendet und die Heizmittel (11) aktiviert, um das Wasser in dem Waschbehälter (3) zu erwärmen;
- einen Spülschritt der ersten Wäscheladung, wobei die Heizmittel (11) deaktiviert sind und das in dem Waschbehälter (3) enthaltene Wasser verwendet wird;
- Einfüllen von Leitungswasser in den Waschbehälter (3) anschließend an das Ende des ersten Waschzyklus und Ausführen eines anschließenden zweiten Waschzyklus einer zweiten Wäscheladung, wobei der zweite Waschzyklus umfasst:
- einen Waschschritt der zweiten Wäscheladung durch ein Verwenden des in dem Waschbehälter (3) enthaltenen Wassers und ein Aktivieren der Heizmittel (11), um das Wasser in dem Waschbehälter (3) zu erwärmen;
- einen Spülschritt der zweiten Wäscheladung, wobei die Heizmittel (11) deaktiviert sind und das in dem Waschbehälter (3) enthaltene Wasser verwendet wird,
und wobei
- ein Anteil von während wenigstens eines Schritts des ersten Waschzyklus verwendetem Wasser von dem Waschbehälter (3) in den Rückgewinnungsbehälter (15) befördert wird; und
- der Anteil rückgewonnenen Wassers während des zweiten Waschzyklus von dem Rückgewinnungsbehälter (15) in den Waschbehälter (3) eingeführt wird.

4. Waschmaschine (1) nach einem der vorhergehenden Ansprüche, wobei die Rückgewinnungsmittel dafür eingerichtet sind und in Abhängigkeit des ausgewählten Waschprogramms von der Steuer-/Regeleinheit (14) gesteuert/geregelt sind, um auf einen Anteil von während des Spülschritts verwendeter Flüssigkeit zurückzugreifen und ihn von dem Waschbehälter (3) in den Rückgewinnungsbehälter (15) zu befördern.

5. Waschmaschine (1) nach einem der vorhergehenden Ansprüche, wobei der von der Steuer-/Regeleinheit (14) gesteuerte/geregelte Waschzyklus eine Mehrzahl von Spülschritten umfasst, welche von Schritten eines Ablassens der Flüssigkeit aus dem Waschbehälter (3) und eines Einfüllens von Leitungswasser in den Waschbehälter (3) unterbrochen sind, und die Rückgewinnungsmittel (18, 19) dafür eingerichtet sind und in Abhängigkeit des ausgewählten Waschprogramms von der Steuer-/Regeleinheit (14) gesteuert/geregelt sind, um auf einen Anteil von während eines letzten Spülschritts der Mehrzahl von Spülschritten verwendeter Flüssigkeit zurückzugreifen und ihn von dem Waschbehälter (3) in den Rückgewinnungsbehälter (15) zu befördern.

6. Waschmaschine (1) nach einem der vorhergehenden Ansprüche, wobei der von der Steuer-/Regeleinheit (14) gesteuerte/geregelte Waschzyklus eine Mehrzahl von Spülschritten umfasst, welche von Schritten eines Ablassens der Flüssigkeit aus dem Waschbehälter (3) und eines Einfüllens von Leitungswasser in den Waschbehälter (3) unterbrochen sind, und die Rückgewinnungsmittel (18, 19) dafür eingerichtet sind und in Abhängigkeit des ausgewählten Waschprogramms von der Steuer-/Regeleinheit (14) gesteuert/geregelt sind, um auf einen Anteil von während eines vorhergehenden Spülschritts bis zu einem letzten Spülschritt der Mehrzahl von Spülschritten verwendeter Flüssigkeit zurückzugreifen und ihn von dem Waschbehälter (3) in den Rückgewinnungsbehälter (15) zu befördern.

7. Waschmaschine (1) nach einem der vorhergehenden Ansprüche, wobei der von der Steuer-/Regeleinheit (14) gesteuerte/geregelte Waschzyklus einen Schritt eines Schleuderns der Wäsche umfasst, welcher auf den letzten Spülschritt folgt, und die Rückgewinnungsmittel (18, 19) dafür eingerichtet sind und in Abhängigkeit des ausgewählten Waschprogramms von der Steuer-/Regeleinheit (14) gesteuert/geregelt sind, um während des Schleuderschritts auf einen Anteil von während des letzten Spülschritts verwendeter Flüssigkeit zurückzugreifen und ihn von dem Waschbehälter (3) in den Rückgewinnungsbehälter (15) zu befördern.

8. Waschmaschine (1) nach einem der vorhergehenden Ansprüche, umfassend einen Trocknungskreislauf (12) mit einer Saugeinheit, einem Wärmetauscher und einem Heizelement, welche durch einen Trocknungskanal miteinander in Verbindung stehen, wobei der von der Steuer-/Regeleinheit (14) gesteuerte/geregelte Waschzyklus nach einem letzten Spülschritt einen Schritt eines Trocknens der Wäsche umfasst und die Rückgewinnungsmittel (18, 19) dafür eingerichtet sind und in Abhängigkeit des ausgewählten Waschprogramms von der Steuer-/Regeleinheit (14) gesteuert/geregelt sind, um auf einen Anteil von während des Spülschritts verwendeter und während des Trocknungsschritts kondensierter Flüssigkeit zurückzugreifen und den Anteil kondensierter Flüssigkeit in den Rückgewinnungsbehälter (15) zu befördern.

9. Waschmaschine (1) nach Anspruch 8, wobei die Rückgewinnungsmittel (18, 19) dafür eingerichtet sind und von der Steuer-/Regeleinheit (14) gesteuert/geregelt sind, um in dem Trocknungsschritt zusätzlich zu der Kondensation auch einen Anteil von Wasser zum Kühlen des Wärmetauschers rückzugewinnen.

10. Waschmaschine (1) nach einem der vorhergehenden Ansprüche, wobei die Rückführmittel (16, 17) in Abhängigkeit des ausgewählten Waschprogramms von der Steuer-/Regeleinheit (14) angetrieben sind, um den Anteil der rückgewonnenen Flüssigkeit während des Spülschritts von dem Rückgewinnungsbehälter (15) in den Waschbehälter (3) einzuführen.

11. Waschmaschine (1) nach einem der vorhergehenden Ansprüche, wobei die Rückführmittel (16, 17) in Abhängigkeit des ausgewählten Waschprogramms von der Steuer-/Regeleinheit (14) angetrieben sind, um den Anteil der rückgewonnenen Flüssigkeit während des Waschschritts von dem Rückgewinnungsbehälter (15) in den Waschbehälter (3) einzuführen.

12. Waschmaschine (1) nach einem der vorhergehenden Ansprüche, wobei es die Steuer-/Regeleinheit (14) mit der Programmauswahl möglich macht, ein Waschprogramm auszuwählen, welches eine Mehrzahl von Waschschritten umfasst, welche von Schritten eines Ablassens von Flüssigkeit aus dem Behälter (3) und eines Einfüllens von Flüssigkeit in den Behälter (3) unterbrochen sind, wobei die Rückführmittel (16, 17) in Abhängigkeit des ausgewählten Waschprogramms von der Steuer-/Regeleinheit (14) angetrieben sind, um den Anteil der rückgewonnenen Flüssigkeit während eines Waschschritts nach einem ersten Waschschritt der Mehrzahl von Waschschritten von dem Rückgewinnungsbehälter (15) in den Waschbehälter (3) einzuführen.

13. Waschmaschine (1) nach einem der vorhergehenden Ansprüche, wobei die Rückführmittel (16, 17) mit einem Waschmittelaufnahmefach (7) in Fluidverbindung stehen, sodass sich während der Einführung des Anteils rückgewonnener Flüssigkeit in den Waschbehälter (3) eine solche rückgewonnene Flüssigkeit mit einem Waschmittel oder in dem Waschmittelaufnahmefach (7) enthaltenen Additiven mischen kann, wenn es die rückgewonnene Flüssigkeit passiert.

14. Waschmaschine (1) nach einem der vorhergehenden Ansprüche, umfassend einen Sensor (21) zum Erfassen der Gegenwart waschaktiver Substanzen in dem Abschnitt rückgewonnener Flüssigkeit in dem Rückgewinnungsbehälter (15), wobei die Steuer-/Regeleinheit (14) dafür eingerichtet ist, das Einfüllen in den Behälter (3)
- von der aus dem Rückgewinnungsbehälter (15) rückgewonnenen Flüssigkeit,
- von Leitungswasser durch ein Waschmittelaufnahmefach (7),
- von das Waschmittelaufnahmefach (7) umgehenden Leitungswasser in Abhängigkeit eines von dem Waschmittelsensor (21) in dem Rückgewinnungsbehälter (15) erfassten Werts zu steuern/regeln.

15. Waschmaschine (1) nach Anspruch 14, bei welcher der Sensor (21) zum Erfassen der Gegenwart waschaktiver Substanzen ein Trübungssensor ist.

16. Waschverfahren mittels einer Waschmaschine (1), umfassend:
- einen innerhalb eines Waschbehälters (3) gehalterten Wäschekorb (5), welcher dafür geeignet ist, die Waschflüssigkeit zu enthalten,
- Heizmittel (11), welche innerhalb des Waschbehälters (3) angeordnet sind,
- ein Einfüllsystem (6, 7), welches dafür geeignet ist, dem Waschbehälter (3) Leitungswasser zuzuführen,
- ein Ablasssystem (9, 10), welches dafür geeignet ist, die in dem Waschbehälter (3) enthaltene Flüssigkeit abzulassen,
- einen Rückgewinnungsbehälter (15), welcher dafür geeignet ist, ein Waschflüssigkeitsvolumen zu enthalten, wobei der Rückgewinnungsbehälter (15) von dem Waschbehälter (3) getrennt ist und zweite Heizmittel (20) umfasst,
wobei das Verfahren die folgenden Schritte umfasst:
B) Einfüllen von Leitungswasser in den Waschbehälter (3) und Ausführen eines ersten Waschzyklus einer ersten Wäscheladung, wobei der erste Waschzyklus umfasst:
B1) einen Waschschritt der ersten Wäscheladung durch ein Verwenden des in dem Waschbehälter (3) enthaltenen Wassers und ein Aktivieren der Heizmittel (11), um das Wasser in dem Waschbehälter (3) zu erwärmen;
B2) einen Spülschritt der ersten Wäscheladung, wobei die Heizmittel (11) deaktiviert sind und das in dem Waschbehälter (3) enthaltene Wasser verwendet wird;
C) Einfüllen von Leitungswasser in den Waschbehälter (3) anschließend an das Ende des ersten Waschzyklus und Ausführen eines zweiten Waschzyklus einer zweiten Wäscheladung, wobei der zweite Waschzyklus umfasst:
C1) einen Waschschritt der zweiten Wäscheladung, welcher das in dem Waschbehälter (3) enthaltene Wasser verwendet und die Heizmittel (11) aktiviert, um das Wasser in dem Waschbehälter (3) zu erwärmen;
C2) einen Spülschritt der zweiten Wäscheladung, wobei die Heizmittel (11) deaktiviert sind und das in dem Waschbehälter (3) enthaltene Wasser verwendet wird;
wobei:
D1) ein Anteil von während wenigstens eines Schritts des ersten Waschzyklus verwendetem Wasser von dem Waschbehälter (3) in den Rückgewinnungsbehälter (15) befördert wird; und
D2) der Anteil von aus dem Rückgewinnungsbehälter (15) rückgewonnenem Wasser während des zweiten Waschzyklus in den Waschbehälter (3) eingeführt wird;
wobei die rückgewonnene Flüssigkeit mittels der zweiten Heizmittel (20) erwärmt wird, bevor sie in den Waschbehälter (3) eingeführt wird.

## Revendications

1. Lave-linge (1) comprenant
- un panier de linge (5) monté à l'intérieur d'une cuve de lavage (3) configurée pour contenir un liquide de lavage,
- des moyens de chauffage (11) agencés à l'intérieur de la cuve de lavage (3),
- un système de chargement (6, 7) adapté pour fournir de l'eau du réseau de distribution d'eau à la cuve de lavage (3),
- un système d'évacuation (9, 10) pour évacuer le liquide contenu dans la cuve de lavage (3),
- une unité de commande (14) avec un sélecteur de programme configuré de façon à mettre en oeuvre automatiquement un programme de lavage comprenant
B) charger de l'eau du réseau de distribution d'eau dans la cuve de lavage (3) et mettre en oeuvre un premier cycle de lavage, le premier cycle de lavage comportant :
B1) une étape de lavage qui utilise l'eau contenue dans la cuve de lavage (3) et active les moyens de chauffage (11) pour chauffer l'eau dans la cuve de lavage (3),
B2) une étape de rinçage qui utilise l'eau contenue dans la cuve de lavage (3), lorsque les moyens de chauffage (11) sont désactivés,
le lave-linge (1) comprenant en outre
- une cuve de récupération (15) distincte de la cuve de lavage (3) et adaptée pour contenir une partie de liquide récupéré,
- des moyens de recyclage (16, 17) configurés pour introduire dans la cuve de lavage (3), pendant une des étapes du cycle de lavage, à partir de la cuve de récupération (15), la partie de liquide récupéré, et
- des moyens de récupération (18, 19) configurés pour transporter, après au moins une étape du cycle de lavage, de la cuve de lavage (3) dans la cuve de récupération (15), une partie du liquide utilisé pendant le cycle de lavage,
**caractérisé en ce que**
la cuve de récupération (15) comprend des deuxièmes moyens de chauffage (20) commandés par l'unité de commande (14) pour chauffer le liquide récupéré avant de l'introduire dans la cuve de lavage (3).

2. Lave-linge (1) selon la revendication 1, **caractérisé en ce que**
- les moyens de recyclage (16, 17) comprennent une pompe de recirculation (16) entraînée par l'unité de commande (14) et agencée dans une conduite de recirculation (17) qui relie la cuve de récupération (15) à la cuve de lavage (3) et
- les moyens de récupération (18, 19) comprennent une conduite de récupération (18) ayant une ouverture de sortie reliée à la cuve de récupération (15) et une ouverture d'entrée reliée à l'aide d'une valve de sélection (19) à une conduite d'évacuation (9) de la cuve de lavage (3) en aval d'une pompe d'évacuation (10),
la valve de sélection (19) et la pompe d'évacuation (10) étant commandées par l'unité de commande (14).

3. Lave-linge (1) selon la revendication 1 ou 2, **caractérisé en ce que** l'unité de commande (14) est configurée pour mettre en oeuvre un programme de lavage comprenant les étapes de
- charger de l'eau du réseau de distribution d'eau dans la cuve de lavage (3) et mettre en oeuvre un premier cycle de lavage d'une première charge de linge, le premier cycle de lavage comportant
- une étape de lavage de la première charge de linge, utilisant l'eau contenue dans la cuve de lavage (3) et activant les moyens de chauffage (11) pour chauffer l'eau dans la cuve de lavage (3),
- une étape de rinçage de la première charge de linge qui utilise l'eau contenue dans la cuve de lavage (3), les moyens de chauffage étant désactivés,
- après la fin du premier cycle de lavage, charger de l'eau du réseau de distribution d'eau dans la cuve de lavage (3) et mettre en oeuvre un deuxième cycle subséquent de lavage d'une deuxième charge de linge, le deuxième cycle de lavage comportant
- une étape de lavage de la deuxième charge de linge, utilisant l'eau contenue dans la cuve de lavage (3) et activant les moyens de chauffage (11) pour chauffer l'eau dans la cuve de lavage (3),
- une étape de rinçage de la deuxième charge de linge qui utilise l'eau contenue dans la cuve de lavage (3), les moyens de chauffage étant désactivés,
et **en ce que**
- une partie de l'eau utilisée pendant au moins une étape du premier cycle de lavage est transportée de la cuve de lavage (3) dans la cuve de récupération (15) et
- pendant le deuxième cycle de lavage, la partie d'eau récupérée est introduite, à partir de la cuve de récupération (15), dans la cuve de lavage (3).

4. Lave-linge (1) selon l'une des revendications précédentes, **caractérisé en ce que** les moyens de récupération sont configurés et commandés par l'unité de commande (14) en fonction du programme de lavage choisi, de façon à extraire une partie du liquide utilisé pendant l'étape de rinçage et à la transporter de la cuve de lavage (3) dans la cuve de récupération (15).

5. Lave-linge (1) selon l'une des revendications précédentes, **caractérisé en ce que** le cycle de lavage commandé par l'unité de commande (14) comprend une pluralité d'étapes de rinçage séparées par des étapes d'évacuation du liquide de la cuve de lavage (3) et de chargement d'eau du réseau de distribution d'eau dans la cuve de lavage (3) et
**en ce que** les moyens de récupération (18, 19) sont configurés et commandés par l'unité de commande (14) en fonction du programme de lavage choisi, de façon à extraire une partie du liquide utilisé pendant une dernière étape de rinçage de la pluralité d'étapes de rinçage et à la transporter de la cuve de lavage (3) dans la cuve de récupération (15).

6. Lave-linge (1) selon l'une des revendications précédentes, **caractérisé en ce que** le cycle de lavage commandé par l'unité de commande (14) comprend une pluralité d'étapes de rinçage séparées par des étapes d'évacuation du liquide de la cuve de lavage (3) et de chargement d'eau du réseau de distribution d'eau dans la cuve de lavage (3) et
**en ce que** les moyens de récupération (18, 19) sont configurés et commandés par l'unité de commande (14) en fonction du programme de lavage choisi, de façon à extraire une partie du liquide utilisé pendant une étape de rinçage antérieure à la dernière étape de rinçage de la pluralité d'étapes de rinçage et à la transporter de la cuve de lavage (3) dans la cuve de récupération (15).

7. Lave-linge (1) selon l'une des revendications précédentes, **caractérisé en ce que** le cycle de lavage commandé par l'unité de commande (14) comprend une étape d'essorage du linge qui a lieu après la dernière étape de rinçage et
**en ce que** les moyens de récupération (18, 19) sont configurés et commandés par l'unité de commande (14) en fonction du programme de lavage choisi, de façon à extraire pendant l'étape d'essorage une partie du liquide utilisé pendant la dernière étape de rinçage et à la transporter de la cuve de lavage (3) dans la cuve de récupération (15).

8. Lave-linge (1) selon l'une des revendications précédentes, comprenant un circuit de séchage (12) avec une unité d'aspiration, un échangeur de chaleur et un élément de chauffage qui communiquent les uns avec les autres par une conduite de séchage, **caractérisé en ce que** le cycle de lavage commandé par l'unité de commande (14) comprend une étape de séchage du linge après une dernière étape de rinçage et
**en ce que** les moyens de récupération (18, 19) sont configurés et commandés par l'unité de commande (14) en fonction du programme de lavage choisi, de façon à extraire une partie du liquide utilisé pendant l'étape de rinçage et condensé pendant l'étape de séchage et à transporter cette partie de liquide condensé dans la cuve de récupération (15).

9. Lave-linge (1) selon la revendication 8, **caractérisé en ce que** les moyens de récupération (18, 19) sont configurés et commandés par l'unité de commande (14) de façon à récupérer à l'étape de séchage, en plus de la condensation, également une partie d'eau pour refroidir l'échangeur de chaleur.

10. Lave-linge (1) selon une des revendications précédentes, **caractérisé en ce que** les moyens de recyclage (16, 17) sont entraînés par l'unité de commande (14) en fonction du programme de lavage choisi, de façon à introduire la partie de liquide récupéré, à partir de la cuve de récupération (15), dans la cuve de lavage (3) pendant l'étape de rinçage.

11. Lave-linge (1) selon une des revendications précédentes, **caractérisé en ce que** les moyens de recyclage (16, 17) sont entraînés par l'unité de commande (14) en fonction du programme de lavage choisi, de façon à introduire la partie de liquide récupéré, à partir de la cuve de récupération (15), dans la cuve de lavage (3) pendant l'étape de lavage.

12. Lave-linge (1) selon l'une des revendications précédentes, **caractérisé en ce que** l'unité de commande (14) avec le sélecteur de programme rend possible de choisir un programme de lavage qui comprend une pluralité d'étapes de lavage séparées par des étapes d'évacuation de liquide de la cuve de lavage (3) et de chargement de liquide dans la cuve de lavage (3) et
**en ce que** les moyens de recyclage (16, 17) sont entraînés par l'unité de commande (14) en fonction du programme de lavage choisi, de façon à introduire la partie de liquide récupéré, à partir de la cuve de récupération (15), dans la cuve de lavage (3) pendant une étape de lavage après une première étape de lavage de la pluralité d'étapes de lavage.

13. Lave-linge (1) selon l'une des revendications précédentes, **caractérisé en ce que** les moyens de recyclage (16, 17) sont en communication fluidique avec un bac (7) destiné à contenir un détergent, de façon que, pendant l'introduction de la partie de liquide récupérée dans la cuve de lavage (3), ce liquide récupéré peut se mélanger avec un détergent de lavage ou un additif contenu dans le bac (7) destiné à contenir le détergent, lorsque le liquide récupéré passe par celui-ci.

14. Lave-linge (1) selon l'une des revendications précédentes, comprenant un capteur (21) pour détecter la présence de substances détergentes dans la partie de liquide récupéré dans la cuve de récupération (15), **caractérisé en ce que** l'unité de commande (14) est configurée pour commander le chargement dans la cuve (3)
- du liquide récupéré de la cuve de récupération (15),
- d'eau du réseau de distribution d'eau en passant par un bac (7) destiné à contenir un détergent,
- d'eau du réseau de distribution d'eau en contournant le bac (7) destiné à contenir un détergent,
en fonction d'une valeur détectée par le capteur de détergent (21) dans la cuve de récupération (15).

15. Lave-linge (1) selon la revendication 14, dans lequel le capteur (21) pour détecter la présence de substances détergentes est un capteur de turbidité.

16. Procédé de lavage avec un lave-linge (1) comprenant,
- un panier de linge (5) monté à l'intérieur d'une cuve de lavage (3) configurée pour contenir un liquide de lavage,
- des moyens de chauffage (11) agencés à l'intérieur de la cuve de lavage (3),
- un système de chargement (6, 7) adapté pour fournir de l'eau du réseau de distribution d'eau à la cuve de lavage (3),
- un système d'évacuation (9, 10) pour évacuer le liquide contenu dans la cuve de lavage (3),
- une cuve de récupération (15) adaptée pour contenir une partie de liquide de lavage, la cuve de récupération (15) étant distincte de la cuve de lavage (3) et comprenant des deuxièmes moyens de chauffage (20),
le procédé comprenant les étapes de
B) charger de l'eau du réseau de distribution d'eau dans la cuve de lavage (3) et mettre en oeuvre un premier cycle de lavage d'une première charge de linge, le premier cycle de lavage comportant :
B1) une étape de lavage de la première charge de linge en utilisant l'eau contenue dans la cuve de lavage (3) et en activant les moyens de chauffage (11) pour chauffer l'eau dans la cuve de lavage (3), B2) une étape de rinçage de la première charge de linge en utilisant l'eau contenue dans la cuve de lavage (3), les moyens de chauffage (11) étant désactivés,
C) à la suite de la fin du premier cycle de lavage, charger de l'eau du réseau de distribution d'eau dans la cuve de lavage (3) et mettre en oeuvre un deuxième cycle de lavage d'une deuxième charge de linge, le deuxième cycle de lavage comportant :
C1) une étape de lavage de la deuxième charge de linge en utilisant l'eau contenue dans la cuve de lavage (3) et en activant les moyens de chauffage (11) pour chauffer l'eau dans la cuve de lavage (3),
C2) une étape de rinçage de la deuxième charge de linge en utilisant l'eau contenue dans la cuve de lavage (3), les moyens de chauffage (11) étant désactivés,
où
D1) une partie de l'eau utilisée pendant au moins une étape du premier cycle de lavage est transportée de la cuve de lavage (3) dans la cuve de récupération (15) et
D2) pendant le deuxième cycle de lavage, la partie d'eau récupérée de la cuve de récupération (15) est introduite dans la cuve de lavage (3), le liquide récupéré étant chauffé à l'aide des deuxièmes moyens de chauffage (20) avant de l'introduire dans la cuve de lavage (3).
